# EUROPÄISCHE PATENTSCHRIFT

(11) **EP 1 665 925 B1**
(45) Veröffentlichungstag und Bekanntmachung des Hinweises auf die Patenterteilung: **07.05.2008**
(21) Anmeldenummer: 05111716.6
(22) Anmeldetag: 06.12.2005
(51) Int. Cl.: A01K 1/015

(54) **Stalleinstreumaterialien**
Litter materials for stables
Matériaux de litière pour étables

(30) Priorität: 06.12.2004 EP 04106331
(43) Veröffentlichungstag der Anmeldung: 07.06.2006
(73) Patentinhaber: GFR Gesellschaft für die Aufbereitung und Verwertung von Reststoffen mbH, 97080 Würzburg (DE)
(72) Erfinder: Demmich, Jörg, Dr.-Ing., 97084 Würzburg (DE); Weißflog, Eckhard, Dr., 97234 Reichenberg-Lindflur (DE); Leuchs, Matthias, 97082 Würzburg (DE)
(74) Vertreter: Schreiber, Christoph

(56) Entgegenhaltungen:
- FR-A- 2 821 238
- US-A- 3 989 796
- US-A- 5 372 314
- PATENT ABSTRACTS OF JAPAN Bd. 017, Nr. 339 (C-1075), 28. Juni 1993 (1993-06-28) & JP 05 038494 A (MATSUSHITA ELECTRIC IND CO LTD), 19. Februar 1993 (1993-02-19)

## Beschreibung

Stalleinstreumaterialien werden verwendet um in Ställen, insbesondere Rinder-/Milchkuh-, Pferde, Schweine- und Geflügelställen, die hygienischen Bedingungen und die Rutschfestigkeit zu verbessern. Auch wenn das Hauptanwendungsgebiet des Einstreumaterials in geschlossenen Ställen liegt, kann es auch auf Freilaufflächen z.B. bei der Geflügelzucht und bei der Eierproduktion eingesetzt werden.

Typische herkömmliche Materialien hierfür sind Stroh und Holzspäne, oft in Kombination mit Branntkalk, die jedoch einen sehr hohen pH-Wert aufweisen können und/oder sehr scharfkantig sind und somit bei den Tieren zu Verletzungen führen können. Bei den handelsüblichen anorganischen Stalleinstreumaterialien handelt es sich häufig um ein Gemisch aus Kalkstein (Calciumcarbonat) mit hohen Branntkalkanteilen und gegebenenfalls Zusätzen weiterer chemischer Hilfsstoffe. Häufig enthalten handelsübliche Stalleinstreumaterialien zur Desinfektion höhere Schwermetallgehalte insbesondere in Form von Kupfer- und/oder Zinksalzen. Da diese Stalleinstreumaterialien über die Gülle letztlich auf landwirtschaftlichen Flächen ausgebracht werden, belasten diese Schwermetallgehalte Boden und Grundwasser.

FR 2,821,238 beschreibt eine Absorptionsmasse enthaltend eine Calciumverbindung zusammen mit pflanzlichen Fasern.

US 5,372,314 beschreibt ein Verfahren zur Herstellung eines Stallmaterials aus einer wässrigen Mischung von beispielsweise Altpapier und Calciumoxid, die anschließend getrocknet wird.

WO 93/19016 beschreibt eine Gipszusammensetzung mit kleiner Dichte, die hergestellt wird aus Wasser, Calciumsulfat, Aluminiumsulfat und einem quellfähigen Ton.

Aufgabe der vorliegenden Erfindung war es, ein Stalleinstreumaterial zur Verfügung zu stellen, das gegenüber den handelsüblichen Materialien verbesserte Eigenschaften aufweist.

Gelöst wird die Aufgabe durch ein Stalleinstreumaterial enthaltend Calciumverbindungen, wobei das Stalleinstreumaterial einen Gehalt an Calciumsulfit von 0,5 bis 70 Massen-%, berechnet als CaSO₃ x 0,5 H₂O, aufweist.

Das erfindungsgemäße Material enthält somit Calciumsulfit. Dies wirkt sich positiv auf die Hygienisierung des Stallbodens aus, ohne aggressive Wirkungen zu zeigen. Bevorzugt beträgt der Gehalt an Calciumsulfit (CaSO₃ x 0,5 H₂O) 0,5 bis 65, mehr bevorzugt 1 bis 65 oder 10 bis 65 und am meisten bevorzugt 30 bis 65 Massen-%. Bevorzugte Bereiche sind auch 5 bis 70 und 15 bis 70 Massen-%.

Überraschenderweise kann durch den Einsatz eines entsprechenden Stalleinstreumaterials die Häufigkeit von Erkrankungen der Tiere verringert werden, was zu einer besseren Tiergesundheit und damit auch zu einer besseren Fleischqualität führt. Calciumsulfit ist unschädlich bei der Aufnahme durch das Tier. Auf den Rindermagen entfaltet Calciumsulfit eine positive Wirkung. Da das Stalleinstreumaterial im Regelfall später als Düngematerial aufgebraucht wird, erweist sich das Calciumsulfit als besonders geeigneter Dünger.

Auch bei der Verwendung der Gülle in Biogasanlagen zeigt sich ein besserer Betrieb der Biogasanlage durch den positiven Einfluss des Stalleinstreumaterials auf den pH-Wert, was zu einer Begünstigung des Bakterienwachstums in den Biogasanlagen führt.

Das Stalleinstreumaterial enthält in einer Ausführungsform als weitere Calciumverbindung kristallwasserfreies oder kristallwasserhaltiges Calciumsulfat. Entsprechende calciumhaltige Mittel können besonders preisgünstig aus industriellen Nebenprodukten erhalten werden. So lassen sich beispielsweise Gipsstäube oder körnige Fraktionen aus der Steingewinnung und/oder der Baustoffproduktion oder aus dem Recycling sowie der Bearbeitung von Gipsbauprodukten einsetzen.

Weiterhin können silikatische und/oder aluminatische Verbindungen enthalten sein, beispielsweise Brechsand, Bausand, Feinperlite, Aschen aus Kohlefeuerungsanlagen, siliziumdioxidhaltige Nebenprodukte aus der chemischen Produktion oder Mischungen davon.

In einer weiteren Ausführungsform enthält das Stalleinstreumaterial zusätzlich Celluloseschnitzel aus dem Recycling von Gipsplatten oder der Gipskartonplattenherstellung.

Die Zusätze an Cellulose bzw. silikatischen/aluminatischen Verbindungen dienen unter anderem der zusätzlichen Verbesserung der Wassereinbindung, der Rutschfestigkeit und/oder der Verbesserung des Stallmilieus. Gegenüber anderen Stalleinstreuprodukten ist das erfindungsgemäße Stalleinstreumaterial arm an Schwermetallen sowie frei von sonstigen toxischen Hygienisierungsstoffen.

Besonders vorteilhaft ist auch, dass das erfindungsgemäße Stalleinstreumaterial ein zugelassenes Düngemittel ist, so dass durch die anschließend gemeinsame Ausbringung dieses Materials mit der Gülle auf landwirtschaftlichen Flächen ein zusätzlicher Düngeeffekt und darüber hinaus keine zusätzliche Boden- oder Grundwasserverunreinigung erfolgt.

Es wurde festgestellt, dass durch das erfindungsgemäße Stalleinstreumaterial hervorragende Werte hinsichtlich der Rutschfestigkeit der Stallböden und Kuhmatten sowie des Wasserbindevermögens erreicht werden. Zusätzlich wird durch das Wasserbindevermögen auch eine deutliche Unterdrückung der Keimbildung auf den Lauf- und Liegeflächen der Ställe erreicht. Dies führt zu einer Verbesserung der Tiergesundheit und zu einer Verbesserung der Stallabluft durch eine Verringerung der Luftkeimzahl.

Weitere Inhaltsstoffe können Calciumoxid oder Calciumhydroxid, kristallwasserfreies/kristallwasserhaltiges Calciumsulfat, Calciumcarbonat und/oder Calciumchlorid sein. Auch lassen sich beispielsweise Entschwefelungsprodukte aus quasitrockenen und trockenen Rauchgasreinigungsanlagen (SAV-Produkte) oder Wirbelschichtfeuerungsaschen (WSFA) von Kohlekraftwerken einsetzen. Das SAV-Produkt kann in diesem Fall hinreichend Calciumsulfit enthalten. Stimmt die Zusammensetzung des SAV-Produktes oder der WSFA nicht für den gewünschten Einsatzzweck, können die oben genannten Calciumverbindungen und Calciumsulfit zugesetzt werden.

Der Gehalt an sonstigen Calciumverbindungen (außer Calciumsulfit) im erfindungsgemäßen Stalleinstreumaterial beträgt vorzugsweise 1 bis 40 Massen-%, mehr bevorzugt 3 bis 30 Massen-%.

Bevorzugte Anteile an Celluloseschnitzeln oder Cellulosefasern oder Celluloseflocken liegen im Bereich von 40 bis 90 Massen-%, vorzugsweise 50 bis 90 Massen-% und besonders bevorzugt 70 bis 90 Massen-%.

Typische Mengen für die feinkörnigen silikatischen bzw. aluminatischen Verbindungen liegen im Bereich von 0,1 bis 30 Massen-%, vorzugsweise 5 bis 25 Massen-% und besonders bevorzugt 5 bis 20 Massen-%.

In einer bevorzugten Ausführungsform beträgt der Anteil an Calciumsulfat 0,5 bis 30 Massen-% (berechnet als CaSO₄).

Typische Anteile der im Stalleinstreumaterial enthaltenen Calciumverbindungen (eine oder mehrere, außer Calciumsulfit) liegen in den Bereichen von
- Calciumoxid oder Calciumhydroxid 0,5 bis 45 Massen-%, bezogen auf CaO,
- Calciumcarbonat 0,5 bis 30 Massen-%, bezogen auf CaCO₃,
- Calciumchlorid 0,1 bis 5 Massen-%, bezogen auf CaCl₂,
- Calciumsulfat 0,5 bis 30 Massen-% bezogen auf CaSO₄.

Weiterhin kann ein handelsüblicher Aromastoff zur Geruchsverbesserung enthalten sein. Der Anteil des handelsüblichen Aromastoffs am Stalleinstreumaterial beträgt zwischen 0 und 2 Massen-%.

Weiterhin können auch Farbstoffe in einem Anteil von 0 bis 2 Massen-% enthalten sein, mit denen beispielsweise verschiedene Stalleinstreumaterialien für den Anwender leicht unterschieden werden können.

In einer weiteren bevorzugten Ausführungsform kann das Stalleinstreumaterial zur Vermeidung der Staubentwicklung mit geringen Mengen Wasser versetzt sein. Typische Mengen liegen hier im Bereich von 0,1 bis 15 Massen-%.

Die bevorzugten Korngrößen der Calciumverbindungen und der silikatischen und/oder der aluminatischen Verbindungen liegen zu über 90% im Bereich von 0,001 bis 5 mm, vorzugsweise 0,001 bis 3 mm und besonders bevorzugt 0,001 bis 2 mm. Die bevorzugten Korngrößen der Celluloseschnitzel liegen zu über 90% im Bereich von 0,1 bis 150 mm, mehr bevorzugt 0,1 bis 100 mm oder 0,1 bis 50 mm und besonders bevorzugt 0,1 bis 15 mm.

Das erfindungsgemäße Stalleinstreumaterial kann mindestens die Hälfte seiner Eigenmasse an Feuchtigkeit aufnehmen, ohne dass Wasser abtropft. Bevorzugt kann es jedoch die seiner Eigenmasse entsprechende Wassermenge aufnehmen.

Das erfindungsgemäße Stalleinstreumaterial kann als zugelassenes Düngemittel oder Bodenhilfsstoff nach Gebrauch zusammen mit Wirtschaftsdüngern wie Gülle oder Mist auf landwirtschaftlichen Flächen aufgebracht werden, da es auf Grund seiner Inhaltsstoffe umweltverträglich ist. Dabei stehen die Inhaltstoffe, insbesondere Calcium und Schwefel, als zusätzliche Pflanzennährstoffe in leicht aufnehmbarer Form zur Verfügung.

Das erfindungsgemäße Stalleinstreumaterial kann als Siloware, Kipper-LKW-Ladung, in Big-Bags, in Säcken oder in Eimern vertrieben werden.

Gegenstand der Erfindung ist weiterhin die Verwendung des Stalleinstreumaterials in
- einem Viehstall, insbesondere in Rinder-/Milchkuh-, Pferde-, Schweine- und Geflügelställen,
- auf Freilaufflächen, insbesondere bei der Geflügelzucht und bei der Eierproduktion.

Gegenstand der Erfindung ist weiterhin die Verwendung von Calciumsulfit als Inhaltsstoff in Stalleinstreumaterialien sowie die Verwendung von Entschwefelungsrückständen aus trockenen und/oder quasitrockenen Sprühabsorptionsverfahren (SAV-Produkte) aus Rauchgasreinigungsanlagen von Kohlekraftwerken oder von WSFA, beide in geeigneter Zusammensetzung zur Herstellung von Stalleinstreumaterial gemäß mindestens einem der Ansprüche 1 bis 11.

Die erfindungsgemäßen Komponenten lassen sich vorteilhafterweise in einem einstufigen Prozess miteinander vermischen. Hierbei ist weder eine Kühlung noch eine Trocknung des Materials erforderlich.

Die Erfindung wird durch die nachfolgenden Beispiele weiter erläutert.

### Beispiel 1

80 bis 90 Massen-% Celluloseschnitzel aus der Gipsplattenaufbereitung, an denen 5 bis 10 Massen-% Gips (Calciumverbindung) anhaften, werden mit 10 bis 20 Massen-% Calciumverbindungen und/oder SAV-Produkt mit 1 bis 5 Massen-% Silikat und mit 0 bis 2 Massen-% Aromastoff vermischt. Das Stalleinstreumaterial enthält 1,6 bis 14 Massen-% Calciumsulfit (CaSO₃ x 0,5 H₂O).

Die Versuchsauswertung ergab ein sehr gutes Aufsaugverhalten bei hoher Rutschfestigkeit auf dem Stalleinstreumaterial. Das verbrauchte Aufsaugmaterial wies einen neutralen Geruch auf.

### Vergleichsbeispiel zu 1:

Im Stall wurden gleiche Gewichtsanteile Stroh/Holzspäne eingebracht. Das Aufsaugverhalten der Stoffe war deutlich geringer als das des erfindungsgemäßen Stalleinstreumaterials bei gleichzeitig niedrigerer Rutschfestigkeit.

### Beispiel 2

80 bis 95 Massen-% SAV-Produkt wurden mit 5 bis 20 Massen-% Gipsschleifstaub (Calciumverbindung) und mit 0 bis 2 Massen-% Aromastoff vermischt. Der Calciumsulfitgehalt (CaSO₃ x 0,5 H₂O) beträgt 12,8 bis 66,5 Massen-%. Eine Zugabe von silikatischen/aluminatischen Verbindungen erfolgte nicht, da das SAV-Produkt schon einen ausreichenden Restgehalt dieser Verbindungen als Verunreinigung enthielt.

Die Versuchsauswertung ergab ein sehr gutes Aufsaugverhalten bei hoher Rutschfestigkeit auf dem Stalleinstreumaterial. Das verbrauchte Aufsaugmaterial wies einen angenehmen Geruch auf. Durch die geringen Anteile an basischen Komponenten im Stalleinstreumaterial konnte zudem keine Reizung des Kuheuters festgestellt werden.

### Vergleichsbeispiel zu 2:

Im Stall wurde ein handelsübliches Stalleinstreupulver vergleichbarer Konsistenz eines Mitbewerbers eingebracht. Das Aufsaugverhalten des Pulvers war deutlich geringer als das des erfindungsgemäßen Stalleinstreumaterials bei gleichzeitig niedrigerer Rutschfestigkeit. Die hohen Anteile basischer Komponenten verursachten zudem eine starke Reizung des Kuheuters. Vom verbrauchten Stalleinstreumaterial ging zudem ein unangenehmer, starker Ammoniakgeruch aus.

## Patentansprüche

1. Stalleinstreumaterial enthaltend
Calciumverbindungen,
wobei das Stalleinstreumaterial einen Gehalt an Calciumsulfit von 0,5 bis 70 Massen-%, berechnet als CaSO₃ x 0,5 H₂O aufweist.

2. Stalleinstreumaterial nach Anspruch 1, **dadurch gekennzeichnet, dass** zusätzlich Celluloseschnitzel aus dem Recycling von Gipsplatten oder der Gipskartonplattenherstellung, enthalten sind.

3. Stalleinstreumaterial nach Anspruch 1 oder 2, **dadurch gekennzeichnet, dass** zusätzlich silikatische und/oder aluminatische Verbindungen enthalten sind.

4. Stalleinstreumaterial nach Anspruch 3, **dadurch gekennzeichnet, dass** es sich bei den silikatischen und/oder aluminatischen Verbindungen um Brechsand, Bausand, Feinperlite, Aschen aus Kohlefeuerungsanlagen, um siliziumdioxidhaltige Nebenprodukte aus der chemischen Produktion oder Mischungen davon handelt.

5. Stalleinstreumaterial nach mindestens einem der Ansprüche 1 bis 4, **dadurch gekennzeichnet, dass** die Calciumverbindungen ausgewählt werden aus der Gruppe bestehend aus Calciumoxid, Calciumhydroxid, kristallwasserfreies und/oder kristallwasserhaltiges Calciumsulfat, kristallwasserfreies und/oder kristalwasserhaltiges Calciumsulfit, Calciumcarbonat, Calciumchlorid und Mischungen davon.

6. Stalleinstreumaterial nach mindestens einem der Ansprüche 2 bis 5, **dadurch gekennzeichnet, dass**
- der Anteil an Celluloseschnitzeln 40 bis 90 Massen-% beträgt und/oder
- der Anteil silikatischer und aluminatischer Verbindungen 0,1 bis 30 Massen-% und /oder
- der Anteil an Calciumsulfat 0,5 bis 30 Massen-% beträgt.

7. Stalleinstreumaterial nach mindestens einem der Ansprüche 1 bis 6, **dadurch gekennzeichnet, dass** es mindestens eine Calciumverbindung mit folgenden Anteilen enthält:
- Calciumoxid oder Calciumhydroxid 0,5 bis 45 Massen-%, bezogen auf CaO,
- Calciumsulfithalbhydrat 5 bis 70, bevorzugt 15 bis 70 Massen-%, bezogen auf CaSO₃ x 0,5 H₂O,
- Calciumcarbonat 0,5 bis 30 Massen-%, bezogen auf CaCO₃,
- Calciumchlorid 0,1 bis 5 Massen-%, bezogen auf CaCl₂,
- Calciumsulfat 0,5 bis 30 Massen-%, bezogen auf CaSO₄.

8. Stalleinstreumaterial nach mindestens einem der Ansprüche 1 bis 7, **dadurch gekennzeichnet, dass** als Calciumverbindung ein SAV-Produkt eingesetzt wird und gegebenenfalls weitere Calciumverbindungen zugesetzt werden.

9. Stalleinstreumaterial nach mindestens einem der Ansprüche 1 bis 8, **dadurch gekennzeichnet, dass** das Stalleinstreumaterial einen Wassergehalt von bis zu 15 Massen-% aufweist.

10. Stalleinstreumaterial nach mindestens einem der Ansprüche 1 bis 9, **dadurch gekennzeichnet, dass** die Korngrößen der Komponenten Calciumverbindungen und silikatische/aluminatische Verbindungen zu über 90% im Bereich von 0,001 mm bis 2 mm liegen und/oder die Korngrößen der Celluloseschnitzeln zu über 90% zwischen 0,1 mm und 100 mm liegen.

11. Stalleinstreumaterial nach mindestens einem der Ansprüche 1 bis 10, **dadurch gekennzeichnet, dass** das Stalleinstreumaterial einen handelsüblichen Aromastoff und/oder Farbstoff in einem Anteil zwischen 0 und 2 Massen-% enthält.

12. Verwendung des Stalleinstreumaterials nach einem der Ansprüche 1 bis 11 als Stalleinstreumaterial in:
- einem Viehstall, insbesondere in Rinder-/Milchkuh-, Pferde-, Schweine- und Geflügelställen,
- auf Freilaufflächen, insbesondere bei der Geflügelzucht und bei der Eierproduktion.

13. Verwendung von Calciumsulfit als Inhaltsstoff in Stalleinstreumaterial.

14. Verwendung von Entschwefelungsrückständen aus trockenen und/oder quasitrockenen Sprühabsorptionsverfahren (SAV-Produkte) aus Rauchgasreinigungsanlagen von Kohlekraftwerken und/oder von Wirbelschichtfeuerungsanlagen aus Kohlekraftwerken (WSFA), beide in geeigneter Zusammensetzung zur Herstellung von Stalleinstreumaterial gemäß mindestens einem der Ansprüche 1 bis 11.

15. Verfahren zur Herstellung von Stalleinstreumaterial nach einem der Ansprüche 1 bis 11, wobei die notwendigen Materialien in einem einstufigen Mischprozess ohne Energiebedarf für Kühlung und/oder Trocknung vermischt werden.

## Claims

1. A litter material for stables, containing:
calcium compounds;
wherein said litter material has a content of calcium sulfite of from 0.5 to 70 mass percent, calculated as CaSO₃·0.5H₂O.

2. The litter material for stables according to claim 1, **characterized in that** cellulose chips from the recycling of gypsum boards or the manufacturing of gypsum plaster boards are additionally contained.

3. The litter material for stables according to claim 1 or 2, **characterized in that** silicate and/or aluminate compounds are additionally contained.

4. The litter material for stables according to claim 3, **characterized in that** said silicate and/or aluminate compounds are crushed sand, building sand, fine pearlites, ash from coal burning plants, silica-containing by-products from chemical production, or mixtures thereof.

5. The litter material for stables according to at least one of claims 1 to 4, **characterized in that** said calcium compounds are selected from the group consisting of calcium oxide, calcium hydroxide, calcium sulfate exempt of water of crystallization or containing water of crystallization, calcium sulfite exempt of water of crystallization or containing water of crystallization, calcium carbonate, calcium chloride and mixtures thereof.

6. The litter material for stables according to at least one of claims 2 to 5, **characterized in that**:
- its content of cellulose chips is from 40 to 90 mass percent; and/or
- its content of silicate and aluminate compounds is from 0.1 to 30 mass percent; and/or
- its content of calcium sulfate is from 0.5 to 30 mass percent.

7. The litter material for stables according to at least one of claims 1 to 6, **characterized by** containing at least one calcium compound with the following proportions:
- from 0.5 to 45 mass percent of calcium oxide or calcium hydroxide, based on CaO;
- from 5 to 70, preferably from 15 to 70, mass percent of calcium sulfite hemihydrate, based on CaSO₃·0.5H₂O;
- from 0.5 to 30 mass percent of calcium carbonate, based on CaCO₃;
- from 0.1 to 5 mass percent of calcium chloride, based on CaCl₂;
- from 0.5 to 30 mass percent of calcium sulfate, based on CaSO₄.

8. The litter material for stables according to at least one of claims 1 to 7, **characterized in that** a product from a spray-absorption process is employed as said calcium compound, and optionally further calcium compounds are added.

9. The litter material for stables according to at least one of claims 1 to 8, **characterized in that** said litter material has a water content of up to 15 mass percent.

10. The litter material for stables according to at least one of claims 1 to 9, **characterized in that** the grain sizes of the components calcium compounds and silicate/aluminate compounds are within a range of from 0.001 mm to 2 mm for more than 90% thereof, and/or the grain sizes of the cellulose chips are from 0.1 mm to 100 mm for more than 90% thereof.

11. The litter material for stables according to at least one of claims 1 to 10, **characterized in that** said litter material contains a commercially available flavoring substance and/or colorant at a proportion of from 0 to 2 mass percent.

12. Use of the litter material for stables according to any of claims 1 to 11 as a litter material:
- in a cattle barn, especially in cow/dairy cow barns, horse stables, pigpens and poultry coops;
- on free range areas, especially in poultry breeding and egg production.

13. Use of calcium sulfite as an ingredient in litter material for stables.

14. Use of desulfurization residues from dry and/or quasi-dry spray-absorption processes (spray-absorption products) from flue gas cleaning plants of coal-fired power plants and/or from fluidizes bed firing systems of coal-fired power plants, both in suitable compositions, for the preparation of a litter material for stables according to at least one of claims 1 to 11.

15. A process for the preparation of a litter material for stables according to at least one of claims 1 to 11, wherein the necessary materials are mixed in a one-step mixing process without energy being required for cooling and/or drying.

## Revendications

1. Matière de litière pour étables contenant des composés du calcium, dans laquelle la matière de litière pour étables présente une teneur en sulfite de calcium de 0,5% à 70% en masse, exprimé en CaSO₃ x 0,5 H₂O.

2. Matière de litière pour étables selon la revendication 1, **caractérisée en ce qu'**elle contient en plus des copeaux de cellulose issus du recyclage de plaques de plâtre ou de la fabrication de plaques de placoplâtre.

3. Matière de litière pour étables selon la revendication 1 ou 2, **caractérisée en ce qu'**elle contient en plus des composés contenant des silicates et/ou des aluminates.

4. Matière de litière pour étables selon la revendication 3, **caractérisée en ce que** les composés contenant des silicates et/ou des aluminates sont du sable concassé, du sable de construction, de la perlite fine, des cendres provenant de centrales thermiques au charbon, des produits secondaires contenant du dioxyde de silicium issus de la production chimique, ou des mélanges de ceux-ci.

5. Matière de litière pour étables selon au moins l'une quelconque des revendications 1 à 4, **caractérisée en ce que** les composés du calcium sont choisis dans le groupe constitué par l'oxyde de calcium, l'hydroxyde de calcium, le sulfate de calcium anhydre et/ou hydraté, le sulfite de calcium anhydre et/ou hydraté, le carbonate de calcium, le chlorure de calcium et des mélanges de ceux-ci.

6. Matière de litière pour étables selon au moins l'une quelconque des revendications 2 à 5, **caractérisée en ce que**
- la proportion de copeaux de cellulose va de 40% à 90% en masse et/ou
- la proportion de composés contenant des silicates et des aluminates va de 0,1% à 30% en masse et/ou
- la proportion de sulfate de calcium va de 0,5% à 30% en masse.

7. Matière de litière pour étables selon au moins l'une quelconque des revendications 1 à 6, **caractérisée en ce qu'**elle contient au moins un composé du calcium dans les proportions suivantes :
- oxyde de calcium ou hydroxyde de calcium, 0,5% à 45% en masse, exprimé en CaO,
- sulfite de calcium hémihydraté, 5% à 70%, de préférence 15% à 70% en masse, exprimé en CaSO₃ x 0,5 H₂O,
- carbonate de calcium, 0,5% à 30% en masse, exprimé en CaCO₃,
- chlorure de calcium, 0,1% à 5% en masse, exprimé en CaCl₂,
- sulfate de calcium 0,5% à 30% en masse, exprimé en CaSO₄.

8. Matière de litière pour étables selon au moins l'une quelconque des revendications 1 à 7, **caractérisée en ce que** l'on met en oeuvre, en tant que composé du calcium, un produit SAV (absorption par pulvérisation) et que l'on ajoute éventuellement d'autres composés du calcium.

9. Matière de litière pour étables selon au moins l'une quelconque des revendications 1 à 8, **caractérisée en ce que** la matière de litière pour étables présente une teneur en eau d'au maximum 15% en masse.

10. Matière de litière pour étables selon au moins l'une quelconque des revendications 1 à 9, **caractérisée en ce que** la granulométrie des composants composés du calcium et composés contenant des silicates/contenant des aluminates est à plus de 90% dans la gamme de 0,001 mm à 2 mm et/ou la granulométrie des copeaux de cellulose est à plus de 90% comprise entre 0,1 mm et 100 mm.

11. Matière de litière pour étables selon au moins l'une quelconque des revendications 1 à 10, **caractérisée en ce que** la matière de litière pour étables contient un aromatisant et/ou un colorant disponible dans le commerce dans une proportion comprise entre 0% et 2% en masse.

12. Utilisation de la matière de litière pour étables selon l'une quelconque des revendications 1 à 11 en tant que matière de litière pour étables dans :
- un bâtiment pour animaux d'élevage, en particulier dans les étables pour bovins/vaches laitières, chevaux, porcs et volailles,
- les espaces en plein air, en particulier pour l'élevage de volailles et la production d'oeufs.

13. Utilisation de sulfite de calcium en tant qu'ingrédient dans une matière de litière pour étables.

14. Utilisation de résidus de désulfuration issus d'un procédé d'absorption par pulvérisation (produits SAV) sec et/ou quasi-sec provenant d'installations d'épuration des gaz de fumée de centrales à charbon et/ou d'installations de combustion en lit fluidisé de centrales à charbon (WSFA), tous deux dans une composition appropriée à la fabrication d'une matière de litière pour étables selon au moins l'une quelconque des revendications 1 à 11.

15. Procédé de fabrication d'une matière de litière pour étables selon l'une quelconque des revendications 1 à 11, dans lequel les matières nécessaires sont mélangées par un procédé de mélange en une seule étape sans besoin d'énergie pour le refroidissement et/ou le séchage.
